# EUROPEAN PATENT SPECIFICATION

(11) **EP 4 766 506 B1**
(45) Date of publication and mention of the grant of the patent: **25.11.2026**
(21) Application number: 24755302.7
(22) Date of filing: 14.08.2024
(51) Int. Cl.: B21D 5/00, B21D 5/02, G05B 19/409, G02B 30/00, G06F 3/048, H04N 13/00

(54) **BENDING MACHINE**
BIEGEMASCHINE
MACHINE À CINTRER

(30) Priority: 21.08.2023 EP 23192439
(43) Date of publication of application: 01.07.2026
(73) Proprietor: Bystronic Laser AG, 3362 Niederönz (CH)
(72) Inventor: BARWICH, Paul, 99310 Arnstadt (DE); LINZ, Christoph, 99334 Amt Wachsenburg (DE)
(74) Representative: Fink Numrich Patentanwälte PartmbB
(86) International application number: PCT/EP2024/072860
(87) International publication number: WO 2025/040526

(56) References cited:
- EP-A1- 2 590 040
- EP-A1- 3 843 914
- WO-A1-03/034318
- DE-A1- 102017 204 629
- JP-A- 2014 065 060

## Description

The invention relates to a bending machine according to the preamble of claim 1.

The utilization of a user interface in the form of a monitor, which is arranged for example to the side of the bending machine, is known for the operation of bending machines, such as press brakes. The monitor is usually designed as a touchscreen, via which an operator enters commands by touching a touch-sensitive display and on which information regarding the bending process, such as relevant bending parameters, is displayed.

It is also known from the prior art to provide the operator of a bending machine with information on the bending process directly at the processing region in which a workpiece is formed. For example, the publication EP 3 843 914 B1 discloses a bending machine in which two-dimensional images are projected onto the front side of the upper press beam or the upper bending tool by means of a projector. The images contain the rear part of the processing region, which is acquired by means of a camera, as well as information or instructions for the further processing of the workpiece.

The publication JP 2014-65060 A discloses an assistance system with AR glasses (AR = augmented reality), in which three-dimensional workpieces or bending tools are displayed to an operator of a bending machine via the AR glasses at certain points on the bending machine at which the corresponding workpiece or bending tool is supposed to be positioned. Furthermore, additional information on the bending process can also be portrayed by means of the AR glasses. Although this assistance system intuitively provides information on the bending process, the operator is forced to always wear the AR glasses.

The object of the invention is to provide a bending machine with which the display of assistance information for assisting an operator via a display device is improved.

This object is achieved by the bending machine according to patent claim 1. Further developments of the invention are defined in the dependent claims.

The bending machine according to the invention includes a bending beam which is movable at least in one working direction of the bending machine in order to form a workpiece, which is preferably a sheet metal, by bending along a bending line. The working direction is preferably the vertical direction. The bending machine further includes a display device and a control device, wherein the display device is actuated by the control device during operation of the bending machine in order to display assistance information for assisting an operator by means of the display device.

The bending machine according to the invention is characterised in that the display device contains one or more 3D imagers which are designed to display at least part of the assistance information as a three-dimensional image floating freely in space. Herein, a "three-dimensional image floating freely in space" is to be understood as a three-dimensional representation that is superimposed on the real environment. As the display device is part of the bending machine, the 3D imager or imagers is/are also part of the bending machine. In particular, the 3D imager or imagers are attached to the bending machine, i.e. mechanically connected to the bending machine or to one or more components of the bending machine.

The bending machine according to the invention has an advantage in that three-dimensional information is intuitively conveyed to the operator of a bending machine without the operator having to wear any optical equipment, such as AR glasses. Instead, a three-dimensional image is already generated by the 3D imager or imagers of the bending machine.

In the event that multiple 3D imagers are provided in the bending machine according to the invention, the three-dimensional image displayed is composed of multiple separate partial images, wherein each 3D imager generates a corresponding partial image. The composition of the partial images in order to form an overall image or the synchronization of the overall image from the partial images is calculated by means of the control device, which then actuates the display device accordingly.

The term "three-dimensional image" as displayed by means of the 3D imager or imagers is to be understood broadly. In particular, this three-dimensional image does not have to be a static image, but the image can also be changed to an appropriate degree if the assistance information to be displayed changes. In addition, the three-dimensional image displayed can be an animated three-dimensional image and, in this sense, a video sequence.

In one embodiment of the bending machine according to the invention, the display device of the bending machine contains only the 3D imager or imagers for displaying assistance information. Nevertheless, it can also be possible for the display device to comprise a display screen in addition to the 3D imager or imagers, wherein the display screen is preferably an operator display via which an operator can also enter operating commands (such as a touchscreen).

The bending machine according to the invention is preferably a press brake for free bending of the workpiece between a movable upper beam and a stationary lower beam, wherein the above-mentioned bending beam is the upper beam in this case. Nevertheless, the bending machine according to the invention can also be of a different type if necessary. The machine could be a panel bender, for example.

In a particularly preferred embodiment, at least one of the 3D imagers and, if appropriate, each of the present 3D imagers is designed in such a way that it generates the three-dimensional image without requiring a carrier surface made of solid material (e.g. glass or plastic) for visualizing the three-dimensional image. 3D imagers that do not require a carrier surface made of solid material in order to generate a three-dimensional image are known per se from the prior art. According to the invention, such 3D imagers are used for the first time to display assistance information in a bending machine.

In a preferred variant, at least one of the 3D imagers includes one or more light strips, wherein the three-dimensional image is generated by rotating the light strip or light strips. In this regard, the plane of rotation of the light strip or light strips represents a (virtual) display surface on which the three-dimensional image is visible without the need for a carrier surface made of solid material. Such 3D imagers are well known and are marketed, for example, by EYE SYSTEMS International GmbH under the brand name Holocircle^{®} (www.holocircle.com).

In a further embodiment, at least one of the 3D imagers includes a projector and one or more filaments and/or one or more strips, wherein a rotation of the filament or filaments and/or the strip or strips forms a projection surface onto which the projector generates the three-dimensional image.

In a further embodiment, at least one of the 3D imagers generates the three-dimensional image in the air medium, preferably in the air medium between the bending beam and a counter-bending beam extending parallel thereto. This 3D imager also does not require a carrier surface made of solid material in order to generate the three-dimensional image. In a preferred variant, this 3D imager is designed in such a way that it generates the three-dimensional image by ionizing air molecules via laser radiation, such as the 3D imager developed by Burton Inc., Japan (www.burton-jp.com).

In a further variant of the bending machine according to the invention, it is also possible that at least one of the 3D imagers and, if appropriate, each of the present 3D imagers is designed in such a way that it generates the three-dimensional image with the aid of at least one carrier surface made of solid material. In this case, a viewer must look at the corresponding carrier surface made of solid material in order to see the three-dimensional image. For example, a hologram projector known per se can be used as a 3D imager with at least one carrier surface made of solid material.

In a further preferred embodiment of the bending machine according to the invention, at least one of the 3D imagers and, if appropriate, each of the present 3D imagers is designed to display the three-dimensional image in a processing region of the bending machine, i.e. in a spatial region at or adjacent to the bending beam and preferably at or adjacent to the bending line.

In a further preferred embodiment, multiple 3D imagers are arranged in a direction parallel to the bending line. In this way, the assistance information can be reproduced at various points along the bending line. Preferably, the 3D imagers are arranged along the entire length of the bending line.

In a further, particularly preferred embodiment of the bending machine according to the invention, at least one of the 3D imagers and, if appropriate, each of the present 3D imagers is arranged inside the bending machine. Alternatively or in addition, at least one of the 3D imagers and, if appropriate, each of the present 3D imagers can be arranged on a bending angle measuring device. Alternatively or in addition, it is also possible that at least one of the 3D imagers and, if appropriate, each of the present 3D imagers is arranged on a stop for the workpiece, in particular on a back-gauge inside the bending machine. Similarly, at least one of the 3D imagers and, if appropriate, each of the present 3D imagers can be arranged on a machine frame of the bending machine. Alternatively or in addition, it is also possible that at least one of the 3D imagers and, if appropriate, each of the present 3D imagers is arranged on a carrier for bending tools. Furthermore, at least one of the 3D imagers and, if appropriate, each of the present 3D imagers can be arranged on a bending aid. Bending aids are known per se and represent devices provided on the bending machine which support the guidance of the workpieces to be formed and in particular the sheets to be bent. The above-mentioned stop and/or the above-mentioned bending angle measuring device are preferably designed to be movable.

In a further preferred embodiment, at least one of the 3D imagers and, if appropriate, each of the present 3D imagers is movable in order to change the location of the three-dimensional image, wherein the at least one 3D imager is preferably movable parallel to the bending line. This allows for flexible positioning of the three-dimensional image at different points on the bending machine. If necessary, the movability of the 3D imager can be achieved by arranging the 3D imager on the above-mentioned movable stop or the above-mentioned movable bending angle measuring device.

In a further preferred variant, the bending machine according to the invention is designed in such a way that, at least temporarily, the workpiece is virtually reproduced in the three-dimensional image in a target shape which corresponds to the desired shape of the real workpiece at a point in time before or during or after a bending step. This provides very effective support for the operator, as the system intuitively illustrates how the workpiece should be bent. The above-mentioned point in time before or during or after a bending step can be a current or past or future point in time, depending on the embodiment. In a preferred embodiment, the three-dimensional image can also be an animation of at least a partial process of the bending process or, if appropriate, of the entire bending process. The virtually reproduced workpiece can be displayed in different ways. In one variant, the workpiece is reproduced to scale. Nevertheless, it is also possible for the workpiece to be displayed in a reduced or enlarged size.

In a preferred variant of the above embodiment, the virtually reproduced workpiece is positioned at a target position which is the desired position of the real workpiece at the point in time before or during or after the bending step. This not only provides the operator of the bending machine with the target shape of the workpiece, but also its desired position on the bending machine.

In a further preferred embodiment, an image acquisition device, such as a camera, is further provided on the bending machine in order to acquire an image containing the real workpiece and the virtually reproduced workpiece. In this regard, the control device is designed in such a way that it determines whether the shape of the real workpiece deviates from the target shape of the virtually reproduced workpiece in the acquired image and/or the position of the real workpiece deviates from the target position of the virtually reproduced workpiece. In the event of a deviation, the control device triggers a predetermined action. With this variant, errors in the completed bending process can be easily detected by means of image comparison. These errors trigger a predetermined action, which can take different forms depending on the embodiment. In particular, the predetermined action can also comprise multiple sub-actions. For example, the predetermined action can comprise interrupting the bending process and/or issuing a warning message, preferably via the display device and in particular via at least one 3D imager.

In a further preferred embodiment, the bending machine according to the invention is designed in such a way that, at least temporarily, at least one bending tool is virtually reproduced in the three-dimensional image. The at least one virtually reproduced bending tool can, for example, be reproduced together with a virtually reproduced workpiece in the three-dimensional image in order to visualize a bending step, for example. This allows a bending step or bending process to be visualized in a very intuitive manner. It is also possible for the at least one virtually reproduced bending tool to be displayed without a workpiece in the three-dimensional image, for example to assist in a changeover process in which bending tools are exchanged on the bending machine for a new bending process. Depending on the embodiment, the at least one virtually reproduced bending tool can be reproduced to scale or, if appropriate, also in a reduced or enlarged size. Furthermore, the at least one virtually reproduced bending tool can also be displayed in an animated three-dimensional image in order to illustrate a bending process or a process for changing bending tools.

In a further preferred embodiment, the at least one virtually reproduced bending tool is positioned at a target position which is the desired position of the at least one real bending tool at a point in time before or during or after a bending step. In particular, the at least one virtually reproduced bending tool can be displayed at the desired target position of the corresponding tool carrier during a changeover process. The above-mentioned point in time before or during or after a bending step can be a current or past or future point in time, depending on the embodiment.

In a further preferred variant of the embodiment just described, an image acquisition means is provided in order to acquire an image containing the at least one real bending tool and the at least one virtually reproduced bending tool. In this regard, the control device is designed in such a way that it determines whether the position of the at least one real bending tool deviates from the target position of the at least one virtually reproduced bending tool in the acquired image, wherein the control device triggers a predetermined action in the event of a deviation. In analogy to the predetermined action described above, the predetermined action can comprise multiple sub-actions. For example, the predetermined action can comprise interrupting the bending process or changeover process and/or issuing a warning message, preferably via the display device and in particular via at least one 3D imager. With the embodiment just described, errors in the bending process or when changing bending tools or re-equipping the bending machine with bending tools can be detected very well.

In a further preferred embodiment, the three-dimensional image contains both a virtually reproduced workpiece and at least one virtually reproduced bending tool, wherein a target constellation is presented which represents a desired arrangement of the real workpiece and the at least one real bending tool at a point in time before or during or after a bending step, wherein this point in time can be a current or past or future point in time. The target constellation composed of the virtual workpiece and the at least one virtually reproduced bending tool can be displayed to scale or in a reduced or enlarged size in the three-dimensional image. In this embodiment, should both the above-described image acquisition device and the above-described image acquisition means be present, the image acquisition means preferably corresponds to the image acquisition device, i.e. it is the same component.

In a further preferred embodiment, the bending machine according to the invention is designed in such a way that, at least temporarily, one or more bending parameters are reproduced in the three-dimensional image in textual and/or graphic form. This provides very good support for the operator while executing the bending process. The bending parameter or parameters may comprise, for example, information on bending angles and/or on the bending sequence and/or on stop positions and/or on properties of the workpiece being processed and/or on properties of the used bending tools and the like.

In a further preferred embodiment of the invention, the 3D imager or imagers is/are controllable by an operator by means of gestures, i.e. the bending machine includes a gesture control which preferably can also be used to enter operating commands for controlling the bending machine. This allows the bending machine to be operated very intuitively. Preferably, the gesture control can also be used to rotate and/or move the three-dimensional image reproduced by means of the 3D imager or imagers.

Exemplary embodiments of the invention are described in detail below with reference to the accompanying figures.

In the drawings:
Figure 1 shows a perspective front view of a bending machine according to an embodiment of the invention;
Figure 2 shows a rear view of the bending machine from Figure 1;
Figure 3 shows a detailed view from Figure 2, which illustrates the three-dimensional image generated;
Figure 4 shows a perspective side view of a further embodiment of a bending machine according to the invention;
Figure 5 shows a detailed view from Figure 4, which illustrates the three-dimensional image generated; and
Figure 6 shows a sectional rear view of the bending machine from Figure 4.

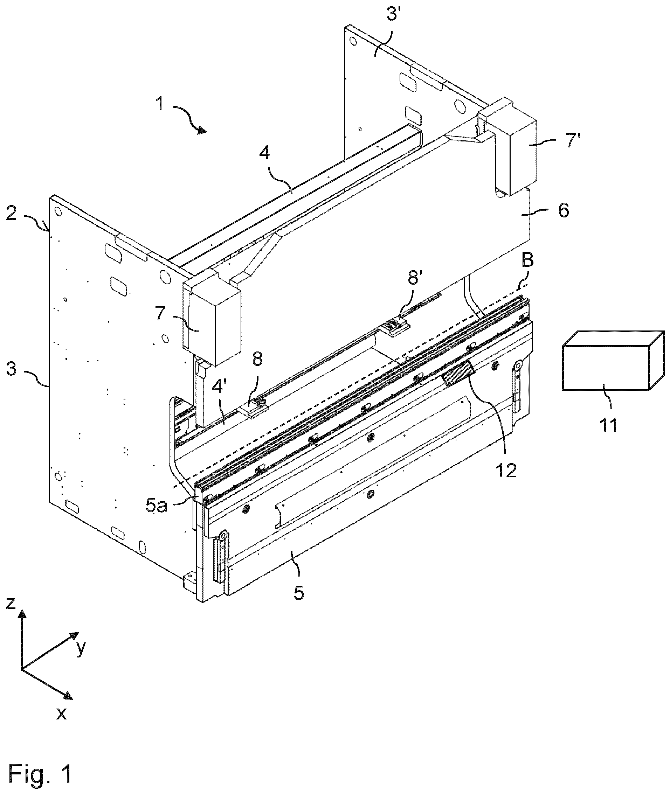

In the following, embodiments of the invention are described with reference to a bending machine in the form of a press brake. In all of the following figures, only those components of the bending machine are shown which are relevant to the invention. Furthermore, the spatial orientation of the bending machine is indicated in all of the following figures by a Cartesian coordinate system with an x-axis, y-axis and z-axis. The x-axis corresponds to the longitudinal direction of the bending machine from back to front. At the front of the bending machine, an appropriate workpiece is inserted into the bending machine for processing. The y-axis represents the transverse direction of the bending machine. The transverse direction runs parallel to the bending line along which the respective workpiece is bent. This bending line can be seen in Figure 1, where it is designated by the reference sign B. The z-axis corresponds to the vertical direction from bottom to top.

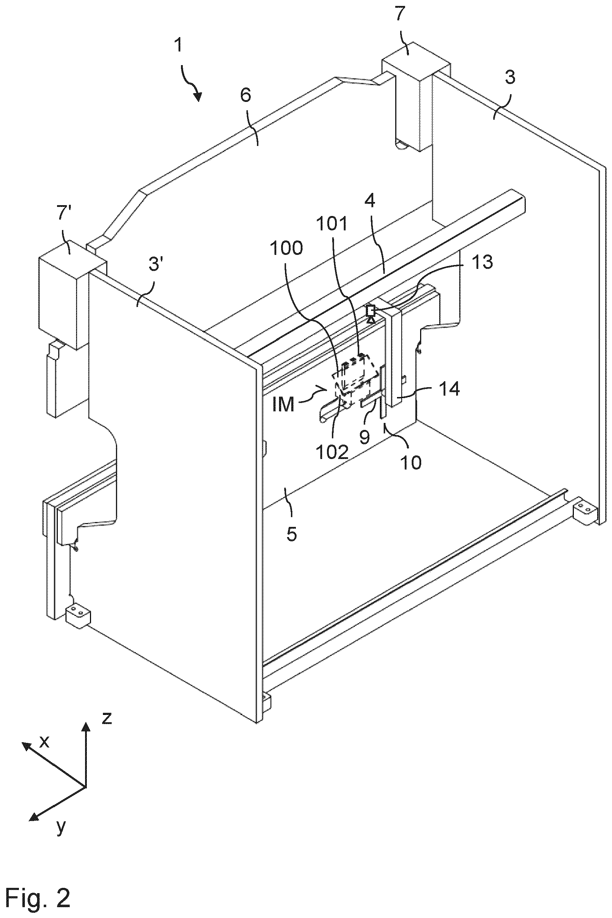

Figure 1 shows a first embodiment of the bending machine according to the invention. The bending machine is designated by the reference sign 1 and is of the press brake type. The machine comprises a machine frame 2, of which two side stands 3 and 3' as well as an upper cross-member 4 and a lower cross-member 4' can be seen in Figure 1. In a manner known per se, the bending machine 1 comprises a bending beam 6 movable in the z-direction in the form of an upper beam and a stationary counter-bending beam 5 in the form of a lower beam. The movement of the bending beam 6 is effected by two hydraulic actuators 7 and 7'. A tool carrier 5a, which is not shown in Figures 2 to 6, is located on the upper side of the counter-bending beam 5. Corresponding lower tools, such as dies, are attached to this tool carrier 5a, wherein these lower tools are not apparent from the figures shown. Similar to the counter-bending beam 5, a tool carrier is also provided on the bending beam 6, which is not shown in the figures for reasons of clarity. Upper tools (not shown) are hooked into this tool carrier. The workpiece to be bent, which in the embodiment described here is a sheet metal, is positioned between the bending beam 6 and the counter-bending beam 5. The bending beam 6 then moves downwards towards the lower tools so that the upper and lower tools act on the workpiece in order to effect its bending.

During the bending process, an operator is present at the front of the bending machine who inserts the workpieces to be bent into the bending machine and triggers the corresponding bending steps, which are carried out on the workpiece automatically by the bending machine. In order to prevent the workpiece to be bent from being inserted too far inside the bending machine 1 by the operator, two stops 8, 8' in the form of backgauges are provided on the lower cross-member 4'. The stops can be moved along the cross-member 4' using a corresponding actuator system.

The bending machine 1 further contains a control device 11, which is only indicated schematically in Figure 1 and has been omitted in the other figures. The control device 11 is used to control the bending machine and interacts with a user interface via which the operator can operate the bending machine. Typically, this user interface comprises a display device in the form of a touchscreen, which is used by the operator to operate the bending machine. In the embodiment described here, a 3D imager 9 is provided as the display device 10. The 3D imager 9 or the display device 10 is concealed in Figure 1. However, they can be seen from the rear view in Figure 2. The 3D imager 9 can be provided in addition to a touchscreen on the bending machine. However, the 3D imager 9 can also be used without an additional touchscreen if appropriate. In this case, for example, a gesture control can be used to operate the bending machine.

Figure 1 also schematically indicates a bending angle measuring device 12 by means of a hatched rectangle, which can be moved along the front of the counter-bending beam 5 in the y-direction. This optional bending angle measuring device 12 can be used to monitor the bending angle during the bending process. In one variant of the invention, the 3D imager 9 is attached to the bending angle measuring device 12.

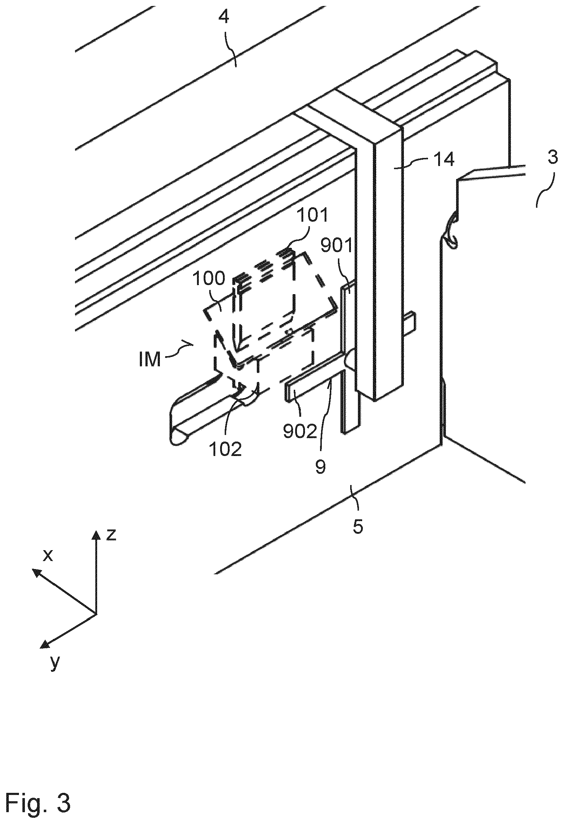

Figure 2 shows a rear view of the bending machine from Figure 1. This view shows the display device 10, which comprises the 3D imager 9. This 3D imager 9 is designed in such a way that it can generate a three-dimensional image floating freely in space without the operator having to wear any optical equipment, such as AR glasses. In the embodiment shown in Figure 2, the 3D imager 9 generates the three-dimensional image by means of two rotating light strips, which emit light in the direction of the front of the bending machine. The light strips are described in more detail below with reference to Figure 3. The image generated by the 3D imager 9 is designated by the reference sign IM. This image IM is reproduced inside the bending machine between the bending beam 6 and the counter-bending beam 5 so that it is clearly visible to the operator during operation of the bending machine.

The reproduced image IM is schematically indicated by dashed lines in Figure 2. It should be noted that this image IM is only visible when the operator looks at the light-emitting sides of the rotating light strips, i.e. when the operator looks at the rotating light strips from the direction of the front of the bending machine. In other words, in reality, the image IM is not visible from the perspective of Figure 2. The image IM portrays a bending step virtually. For this purpose, a workpiece 100 that has just been bent, on which an upper tool 101 and a lower tool 102 act, is shown virtually. The virtually reproduced bending step corresponds to a target constellation of a real bending step currently being performed or a past bending step or a future bending step.

The 3D imager 9 is movably attached to the upper cross-member 4 via a vertically extending strut 14. In other words, the 3D imager 9 can be moved together with the strut 14 along the transverse direction y and thus along the bending line B. This allows for flexible positioning of the three-dimensional image IM. In this regard, the image IM is preferably reproduced at a position in the y-direction at which the corresponding real bending step is being performed or has been performed or will be performed. In this way, the operator always receives very good feedback via the displayed three-dimensional image IM as to whether the bending process is currently being carried out correctly.

Optionally, an image acquisition device 13 in the form of a camera can also be provided in the bending machine 1, which is to be arranged in such a way that it can also acquire the three-dimensional image IM. The camera is only shown schematically in Figure 2, wherein the position and orientation of the camera shown do not correspond to real conditions. The camera is used to acquire imagery of the bending process while simultaneously the three-dimensional image IM is portrayed, which represents the target constellation of the real bending step currently being performed. The images acquired by the camera are transmitted to the control device 11 and evaluated there. If an image comparison of the real bending step with the virtual bending step according to the image IM determines that there is a deviation between the real bending step and the virtual bending step, suitable actions can be triggered by the control device 11. For example, the bending process can be interrupted or the operator can be informed that the bending process is being carried out incorrectly, for example by displaying a corresponding message in the image IM.

Figure 3 again shows a detailed view of the 3D imager 9 from Figure 2. As can be seen, the 3D imager 9 includes two light strips 901 and 902 arranged perpendicular to one another. The light strips 901, 902 each contain a plurality of light elements on their front side (i.e. on their side facing the image IM), which can be individually actuated and are designed as LEDs, for example. In order to generate the free-floating image IM, the light strips 901, 902 are set into rapid rotation in the y-z plane using a motor integrated in the 3D imager. At the same time, the individual light elements of the strips are suitably actuated so that when the viewer looks at the plane of rotation in the direction of the light elements, the three-dimensional image IM that lies in front of the plane of rotation becomes visible. The 3D image generation technology just described is known per se and is being used for the first time to display assistance information in a bending machine.

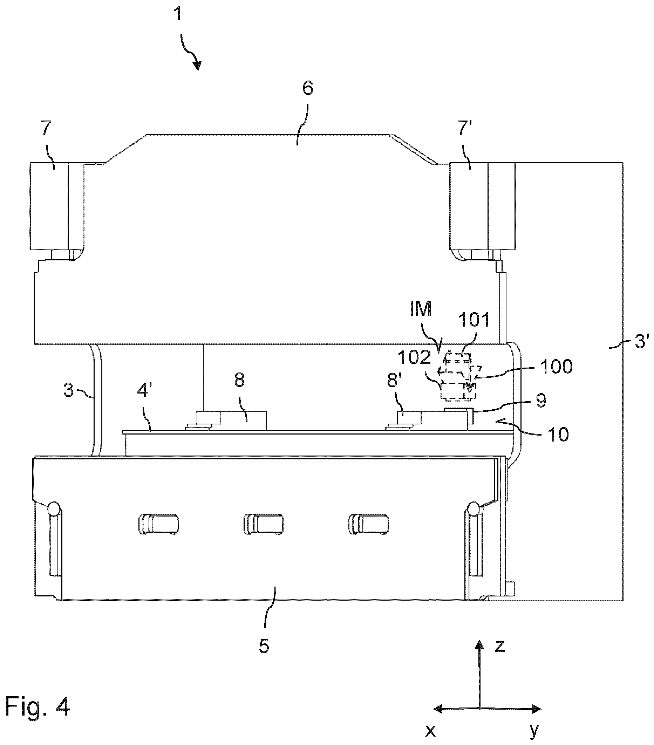

Figure 4 shows a perspective side view of a second embodiment of a bending machine according to the invention. The components of this bending machine, which correspond to the components in the figures described above, are designated by the same reference signs. The bending machine of the second embodiment differs from the first embodiment in that a different type of 3D imager is used to generate the free-floating three-dimensional image and this 3D imager is arranged at a different location.

Figure 4 clearly shows the two stops 8, 8' of the bending machine 1, which are provided on the lower cross-member 4' and are movable along its longitudinal direction. The display device 10 with the 3D imager 9 is now provided on the stop 8' at its rear end. The 3D imager 9 generates the three-dimensional image IM, which floats above the 3D imager 9 inside the bending machine. In analogy to the first embodiment, this image again shows a bending step with the workpiece 100, upper tool 101 and lower tool 102.

The 3D imager 9 in Figure 4 no longer uses rotating light strips for image generation. Instead, a different technology is used. For example, the 3D imager 9 can be a hologram projector, from the top of which light emerges, which generates a hologram projection, which portrays the three-dimensional image IM, by means of transparent carrier surfaces made of solid material (e.g. glass or plastic). The transparent carrier surfaces can, for example, form the side surfaces of a pyramid or a truncated pyramid, wherein the pyramid or the truncated pyramid is placed on a display on the top of the 3D imager 9 in such a way that the side surfaces diverge upwards. Alternatively, a 3D imager 9 can be used, which does not require carrier surfaces for image generation. For example, a 3D imager 9 can be used, which generates the three-dimensional image IM by ionizing air molecules via a laser beam.

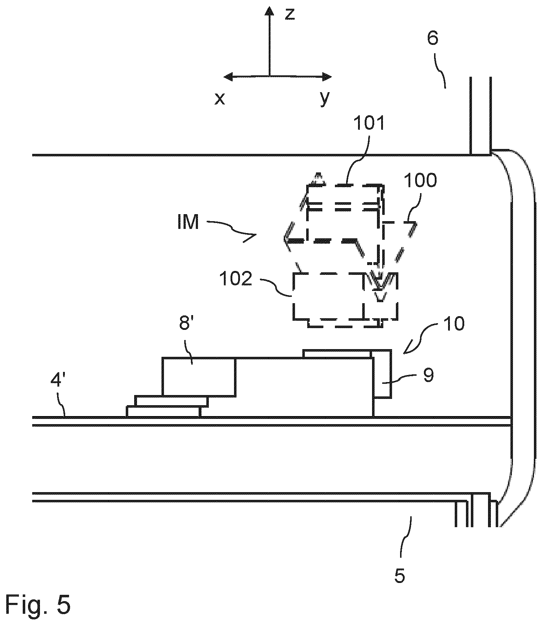

Figure 5 shows a detailed view from Figure 4, which once again shows the image IM generated by the 3D imager 9. Figure 5 again clearly shows the virtually reproduced workpiece 100, which is currently being bent using an upper tool 101 and a lower tool 102.

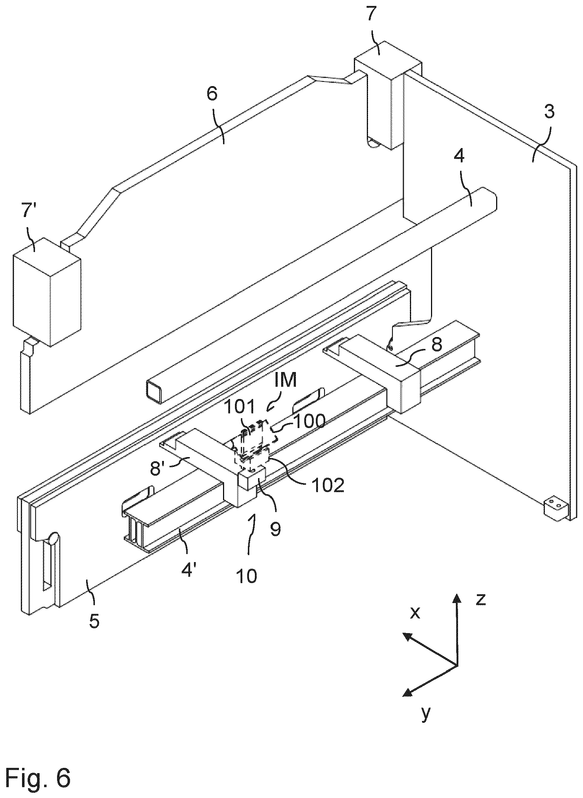

Figure 6 shows a sectional rear view of the bending machine from Figure 4. It can be seen from Figure 6 that the generated three-dimensional image IM is inside the bending machine and is located directly above the 3D imager 9. The embodiment of Figure 4 has the advantage that the movable stop 8' already provided is also used to move the 3D imager 9 and thus for flexible positioning of the generated three-dimensional image IM. In other words, no additional actuator system needs to be installed in order to move the 3D imager 9. Instead, the existing actuator system for the stop can be used.

The embodiments of the invention described in the foregoing provide a number of advantages. By integrating a 3D imager into a bending machine, assistance information for the operator of the bending machine can be intuitively visualized in the form of a three-dimensional image. In this case, it is not necessary for the operator to wear any optical equipment. In a preferred variant, the three-dimensional image is arranged directly at positions in the processing region of the bending machine and can thus be directly perceived by the operator without the operator having to look away from the processing region. The three-dimensional image can be animated if appropriate. Furthermore, the image can reproduce the workpiece to be bent or the corresponding bending tool. 3D imagers known per se can be used to display the three-dimensional image, but this is the first time they are used to display assistance information in a bending machine.

### List of reference signs

- 1: Bending machine (press brake)
- 2: Machine frame
- 3, 3': Side stands
- 4, 4': Cross-members
- 5: Counter-bending beam (lower beam)
- 5a: Tool carrier
- 6: Bending beam (upper beam)
- 7, 7': Hydraulic actuators
- 8, 8': Stops (backgauges)
- 9: 3D imager
- 901, 902: Light strips
- 10: Display device
- 11: Control device
- 12: Bending angle measuring device
- 13: Image acquisition device (camera)
- 14: Strut
- B: Bending line
- IM: Three-dimensional image
- 100: Workpiece within the three-dimensional image IM
- 101: Bending tool (upper tool) within the image IM
- 102: Bending tool (lower tool) within the image IM

## Claims

1. A bending machine, including
- a bending beam (6) which is movable at least in one working direction (z) of the bending machine (1) in order to form a workpiece by bending along a bending line (B),
- a display device (10) and
- a control device (11),
wherein the display device (10) is actuated by the control device (11) during operation of the bending machine (1) in order to display assistance information for assisting an operator by means of the display device (10),
**characterised in that**
the display device (10) contains one or more 3D imagers (9) which are designed to display at least part of the assistance information as a three-dimensional image (IM) floating freely in space.

2. The bending machine according to claim 1, **characterised in that** at least one of the 3D imagers (9) is designed in such a way that it generates the three-dimensional image (IM) without requiring a carrier surface made of solid material for visualizing the three-dimensional image (IM).

3. The bending machine according to claim 1 or 2, **characterised in that** at least one of the 3D imagers (9) includes one or more light strips (901, 902), wherein the three-dimensional image is generated by rotating the light strip or light strips (901, 902).

4. The bending machine according to any one of the preceding claims, **characterised in that** at least one of the 3D imagers (9) generates the three-dimensional image (IM) in the air medium, preferably in the air medium between the bending beam (6) and a counter-bending beam (5) extending parallel thereto.

5. The bending machine according to any one of the preceding claims, **characterised in that** at least one of the 3D imagers (9) is designed to display the three-dimensional image (IM) in a processing region of the bending machine and preferably at or adjacent to the bending line (B).

6. The bending machine according to any one of the preceding claims, **characterised in that** multiple 3D imagers (9) are arranged in a direction parallel to the bending line (B).

7. The bending machine according to any one of the preceding claims, **characterised in that** at least one of the 3D imagers (9) is arranged inside the bending machine (1) and/or at least one of the 3D imagers (9) is arranged on a bending angle measuring device (12) and/or at least one of the 3D imagers (9) is arranged on a stop (8, 8') for the workpiece and/or at least one of the 3D imagers (9) is arranged on a machine frame (2) of the bending machine (1) and/or at least one of the 3D imagers (9) is arranged on a carrier (5a) for bending tools and/or at least one of the 3D imagers (9) is arranged on a bending aid.

8. The bending machine according to any one of the preceding claims, **characterised in that** at least one of the 3D imagers (9) is movable in order to change the location of the three-dimensional image (IM), wherein the at least one 3D imager (9) is preferably movable parallel to the bending line (B).

9. The bending machine according to any one of the preceding claims, **characterised in that** the bending machine (1) is designed in such a way that, at least temporarily, the workpiece (100) is virtually reproduced in the three-dimensional image (IM) in a target shape which corresponds to the desired shape of the real workpiece at a point in time before or during or after a bending step.

10. The bending machine according to claim 9, **characterised in that** the virtually reproduced workpiece (100) is positioned at a target position which is the desired position of the real workpiece at the point in time before or during or after the bending step.

11. The bending machine according to claim 9 or 10, **characterised in that** an image acquisition device (13) is provided in order to acquire an image containing the real workpiece and the virtually reproduced workpiece (100), wherein the control device (11) is designed in such a way that it determines whether the shape of the real workpiece deviates from the target shape of the virtually reproduced workpiece (100) in the acquired image and/or the position of the real workpiece deviates from the target position of the virtually reproduced workpiece (100), wherein the control device (11) triggers a predetermined action in the event of a deviation.

12. The bending machine according to any one of the preceding claims, **characterised in that** the bending machine (1) is designed in such a way that, at least temporarily, at least one bending tool (101, 102) is virtually reproduced in the three-dimensional image (IM).

13. The bending machine according to claim 12, **characterised in that** the at least one virtually reproduced bending tool (101, 102) is positioned at a target position which is the desired position of the at least one real bending tool (101, 102) at a point in time before or during or after a bending step.

14. The bending machine according to claim 13, **characterised in that** an image acquisition means is provided in order to acquire an image containing the at least one real bending tool and the at least one virtually reproduced bending tool (101, 102), wherein the control device (11) is designed in such a way that it determines whether the position of the at least one real bending tool deviates from the target position of the at least one virtually reproduced bending tool (101, 102) in the acquired image, wherein the control device (11) triggers a predetermined action in the event of a deviation.

15. The bending machine according to any one of claims 12 to 14 in combination with any one of claims 9 to 11, **characterised in that** the three-dimensional image (IM) contains both the virtually reproduced workpiece (100) and the at least one virtually reproduced bending tool (101, 102), wherein a target constellation is presented which represents a desired arrangement of the real workpiece and the at least one real bending tool at the point in time before or during or after a bending step.

16. The bending machine according to any one of the preceding claims, **characterised in that** the bending machine (1) is designed in such a way that, at least temporarily, one or more bending parameters are reproduced in the three-dimensional image (IM) in textual and/or graphic form.

17. The bending machine according to any one of the preceding claims, **characterised in that** the 3D imager or imagers (9) is/are controllable by an operator by means of gestures.

## Patentansprüche

1. Biegemaschine, die Folgendes beinhaltet:
- eine Biegewange (6), die mindestens in einer Arbeitsrichtung (z) der Biegemaschine (1) beweglich ist, um ein Werkstück durch Biegen entlang einer Biegelinie (B) zu formen,
- eine Anzeigevorrichtung (10) und
- eine Steuervorrichtung (11),
wobei die Anzeigevorrichtung (10) während des Betriebs der Biegemaschine (1) von der Steuervorrichtung (11) betätigt wird, um mithilfe der Anzeigevorrichtung (10) Hilfsinformationen zur Unterstützung eines Bedieners anzuzeigen,
**dadurch gekennzeichnet, dass**
die Anzeigevorrichtung (10) einen oder mehrere 3D-Bilderzeuger (9) enthält, die dazu ausgelegt sind, mindestens einen Teil der Hilfsinformationen als ein frei im Raum schwebendes dreidimensionales Bild (IM) anzuzeigen.

2. Biegemaschine nach Anspruch 1, **dadurch gekennzeichnet, dass** mindestens einer der 3D-Bilderzeuger (9) derart ausgebildet ist, dass er das dreidimensionale Bild (IM) erzeugt, ohne dass eine Trägerfläche aus festem Material zur Visualisierung des dreidimensionalen Bildes (IM) erforderlich ist.

3. Biegemaschine nach Anspruch 1 oder 2, **dadurch gekennzeichnet, dass** mindestens einer der 3D-Bilderzeuger (9) einen oder mehrere Lichtstreifen (901, 902) einschließt, wobei das dreidimensionale Bild durch eine Drehung des Lichtstreifens oder der Lichtstreifen (901, 902) erzeugt wird.

4. Biegemaschine nach einem der vorstehenden Ansprüche, **dadurch gekennzeichnet, dass** mindestens einer der 3D-Bilderzeuger (9) das dreidimensionale Bild (IM) im Luftmedium erzeugt, vorzugsweise im Luftmedium zwischen der Biegewange (6) und einer parallel dazu verlaufenden Gegenbiegewange (5).

5. Biegemaschine nach einem der vorstehenden Ansprüche, **dadurch gekennzeichnet, dass** mindestens einer der 3D-Bilderzeuger (9) dazu ausgelegt ist, das dreidimensionale Bild (IM) in einem Bearbeitungsbereich der Biegemaschine und vorzugsweise an oder benachbart zur Biegelinie (B) anzuzeigen.

6. Biegemaschine nach einem der vorstehenden Ansprüche, **dadurch gekennzeichnet, dass** mehrere 3D-Bilderzeuger (9) in einer zur Biegelinie (B) parallelen Richtung angeordnet sind.

7. Biegemaschine nach einem der vorstehenden Ansprüche, **dadurch gekennzeichnet, dass** mindestens einer der 3D-Bilderzeuger (9) im Inneren der Biegemaschine (1) angeordnet ist und/oder mindestens einer der 3D-Bilderzeuger (9) an einer Biegewinkel-Messvorrichtung (12) angeordnet ist und/oder mindestens einer der 3D-Bilderzeuger (9) an einem Anschlag (8, 8') für das Werkstück angeordnet ist und/oder mindestens einer der 3D-Bilderzeuger (9) an einem Maschinenrahmen (2) der Biegemaschine (1) angeordnet ist und/oder mindestens einer der 3D-Bilderzeuger (9) an einem Träger (5a) für Biegewerkzeuge angeordnet ist und/oder mindestens einer der 3D-Bilderzeuger (9) an einer Biegehilfe angeordnet ist.

8. Biegemaschine nach einem der vorstehenden Ansprüche, **dadurch gekennzeichnet, dass** mindestens einer der 3D-Bilderzeuger (9) beweglich ist, um den Standort des dreidimensionalen Bildes (IM) zu verändern, wobei der mindestens eine 3D-Bilderzeuger (9) vorzugsweise parallel zur Biegelinie (B) beweglich ist.

9. Biegemaschine nach einem der vorstehenden Ansprüche, **dadurch gekennzeichnet, dass** die Biegemaschine (1) derart ausgelegt ist, dass das Werkstück (100) mindestens vorübergehend im dreidimensionalen Bild (IM) in einer Sollform virtuell reproduziert wird, die der gewünschten Form des realen Werkstücks zu einem Zeitpunkt vor, während oder nach einem Biegeschritt entspricht.

10. Biegemaschine nach Anspruch 9, **dadurch gekennzeichnet, dass** das virtuell reproduzierte Werkstück (100) an einer Sollposition positioniert ist, die der gewünschten Position des realen Werkstücks zu dem Zeitpunkt vor, während oder nach dem Biegeschritt entspricht.

11. Biegemaschine nach Anspruch 9 oder 10, **dadurch gekennzeichnet, dass** eine Bildaufnahmevorrichtung (13) bereitgestellt ist, um ein Bild zu erfassen, das das reale Werkstück und das virtuell reproduzierte Werkstück (100) enthält, wobei die Steuervorrichtung (11) derart ausgelegt ist, dass sie bestimmt, ob die Form des realen Werkstücks von der Sollform des virtuell reproduzierten Werkstücks (100) im erfassten Bild und/oder die Position des realen Werkstücks von der Sollposition des virtuell reproduzierten Werkstücks (100) abweicht, wobei die Steuervorrichtung (11) im Falle einer Abweichung eine vorbestimmte Maßnahme auslöst.

12. Biegemaschine nach einem der vorstehenden Ansprüche, **dadurch gekennzeichnet, dass** die Biegemaschine (1) derart ausgelegt ist, dass zumindest zeitweise mindestens ein Biegewerkzeug (101, 102) im dreidimensionalen Bild (IM) virtuell reproduziert wird.

13. Biegemaschine nach Anspruch 12, **dadurch gekennzeichnet, dass** das mindestens eine virtuell reproduzierte Biegewerkzeug (101, 102) an einer Sollposition positioniert ist, die der gewünschten Position des mindestens einen realen Biegewerkzeugs (101, 102) zu einem Zeitpunkt vor, während oder nach einem Biegeschritt entspricht.

14. Biegemaschine nach Anspruch 13, **dadurch gekennzeichnet, dass** eine Bildaufnahmevorrichtung bereitgestellt ist, um ein Bild zu erfassen, das das mindestens eine reale Biegewerkzeug und das mindestens eine virtuell reproduzierte Biegewerkzeug (101, 102) enthält, wobei die Steuervorrichtung (11) derart ausgelegt ist, dass sie bestimmt, ob die Position des mindestens einen realen Biegewerkzeugs von der Sollposition des mindestens einen virtuell reproduzierten Biegewerkzeugs (101, 102) in dem erfassten Bild abweicht, wobei die Steuervorrichtung (11) im Falle einer Abweichung eine vorbestimmte Maßnahme auslöst.

15. Biegemaschine nach einem der Ansprüche 12 bis 14 in Kombination mit einem der Ansprüche 9 bis 11, **dadurch gekennzeichnet, dass** das dreidimensionale Bild (IM) sowohl das virtuell reproduzierte Werkstück (100) als auch das mindestens eine virtuell reproduzierte Biegewerkzeug (101, 102) enthält, wobei eine Sollkonstellation dargestellt wird, die eine gewünschte Anordnung des realen Werkstücks und des mindestens einen realen Biegewerkzeugs zu dem Zeitpunkt vor, während oder nach einem Biegeschritt darstellt.

16. Biegemaschine nach einem der vorstehenden Ansprüche, **dadurch gekennzeichnet, dass** die Biegemaschine (1) derart ausgelegt ist, dass mindestens zeitweise ein oder mehrere Biegeparameter im dreidimensionalen Bild (IM) in textueller und/oder grafischer Form reproduziert werden.

17. Biegemaschine nach einem der vorstehenden Ansprüche, **dadurch gekennzeichnet, dass** der oder die 3D-Bilderzeuger (9) von einem Bediener mittels Gesten steuerbar sind.

## Revendications

1. Machine à cintrer, comprenant
- une traverse de cintrage (6) mobile au moins dans une direction de travail (z) de la machine à cintrer (1) afin de former une pièce par cintrage le long d'une ligne de cintrage (B),
- un dispositif d'affichage (10) et
- un dispositif de commande (11),
dans laquelle le dispositif d'affichage (10) est actionné par le dispositif de commande (11) pendant le fonctionnement de la machine à cintrer (1) afin d'afficher des informations d'assistance pour aider un opérateur au moyen du dispositif d'affichage (10),
**caractérisée en ce que**
le dispositif d'affichage (10) contient un ou plusieurs imageurs 3D (9) conçus pour afficher au moins une partie des informations d'assistance sous forme d'image tridimensionnelle (IM) flottant librement dans l'espace.

2. Machine à cintrer selon la revendication 1, **caractérisée en ce qu'**au moins l'un des imageurs 3D (9) est conçu de manière à générer l'image tridimensionnelle (IM) sans nécessiter de surface porteuse en matériau solide pour visualiser l'image tridimensionnelle (IM).

3. Machine à cintrer selon la revendication 1 ou 2, **caractérisée en ce qu'**au moins l'un des imageurs 3D (9) comprend une ou plusieurs bandes lumineuses (901, 902), dans laquelle l'image tridimensionnelle est générée par rotation de la ou des bandes lumineuses (901, 902).

4. Machine à cintrer selon l'une quelconque des revendications précédentes, **caractérisée en ce qu'**au moins l'un des imageurs 3D (9) génère l'image tridimensionnelle (IM) dans le milieu aérien, de préférence dans le milieu aérien entre la traverse de cintrage (6) et une traverse de contre-cintrage (5) s'étendant parallèlement à celle-ci.

5. Machine à cintrer selon l'une quelconque des revendications précédentes, **caractérisée en ce qu'**au moins l'un des imageurs 3D (9) est conçu pour afficher l'image tridimensionnelle (IM) dans une zone de traitement de la machine à cintrer et de préférence au niveau ou à proximité de la ligne de cintrage (B).

6. Machine à cintrer selon l'une quelconque des revendications précédentes, **caractérisée en ce que** plusieurs imageurs 3D (9) sont agencés dans une direction parallèle à la ligne de cintrage (B).

7. Machine à cintrer selon l'une quelconque des revendications précédentes, **caractérisée en ce qu'**au moins l'un des imageurs 3D (9) est agencé à l'intérieur de la machine à cintrer (1) et/ou **en ce qu'**au moins l'un des imageurs 3D (9) est agencé sur un dispositif de mesure d'angle de cintrage (12) et/ou **en ce qu'**au moins l'un des imageurs 3D (9) est agencé sur une butée (8, 8') destinée à la pièce et/ou **en ce qu'**au moins l'un des imageurs 3D (9) est agencé sur un châssis de machine (2) de la machine à cintrer (1) et/ou **en ce qu'**au moins l'un des imageurs 3D (9) est agencé sur un support (5a) destiné à des outils de cintrage et/ou **en ce qu'**au moins l'un des imageurs 3D (9) est agencé sur un dispositif d'aide au cintrage.

8. Machine à cintrer selon l'une quelconque des revendications précédentes, **caractérisée en ce qu'**au moins l'un des imageurs 3D (9) est mobile afin de modifier l'emplacement de l'image tridimensionnelle (IM), dans laquelle l'au moins un imageur 3D (9) est de préférence mobile parallèlement à la ligne de cintrage (B).

9. Machine à cintrer selon l'une quelconque des revendications précédentes, **caractérisée en ce que** la machine à cintrer (1) est conçue de sorte que, au moins temporairement, la pièce (100) est reproduite virtuellement sur l'image tridimensionnelle (IM) dans une forme cible qui correspond à la forme souhaitée de la pièce réelle à un moment donné avant, pendant ou après une étape de cintrage.

10. Machine à cintrer selon la revendication 9, **caractérisée en ce que** la pièce reproduite virtuellement (100) est placée dans une position cible qui est la position souhaitée de la pièce réelle à un moment donné avant, pendant ou après l'étape de cintrage.

11. Machine à cintrer selon la revendication 9 ou 10, **caractérisée en ce qu'**un dispositif d'acquisition d'image (13) est prévu afin d'acquérir une image contenant la pièce réelle et la pièce reproduite virtuellement (100), dans laquelle le dispositif de commande (11) est conçu de manière à déterminer si la forme de la pièce réelle s'écarte de la forme cible de la pièce reproduite virtuellement (100) sur l'image acquise et/ou si la position de la pièce réelle s'écarte de la position cible de la pièce reproduite virtuellement (100), dans laquelle le dispositif de commande (11) déclenche une action prédéterminée en cas d'écart.

12. Machine à cintrer selon l'une quelconque des revendications précédentes, **caractérisée en ce que** la machine à cintrer (1) est conçue de sorte que, au moins temporairement, au moins un outil de cintrage (101, 102) est reproduit virtuellement sur l'image tridimensionnelle (IM).

13. Machine à cintrer selon la revendication 12, **caractérisée en ce que** l'au moins un outil de cintrage reproduit virtuellement (101, 102) est placé dans une position cible qui est la position souhaitée de l'au moins un outil de cintrage réel (101, 102) à un moment donné avant, pendant ou après une étape de cintrage.

14. Machine à cintrer selon la revendication 13, **caractérisée en ce qu'**un moyen d'acquisition d'image est prévu afin d'acquérir une image contenant l'au moins un outil de cintrage réel et l'au moins un outil de cintrage reproduit virtuellement (101, 102), dans laquelle le dispositif de commande (11) est conçu de manière à déterminer si la position de l'au moins un outil de cintrage réel s'écarte de la position cible de l'au moins un outil de cintrage reproduit virtuellement (101, 102) sur l'image acquise, dans laquelle le dispositif de commande (11) déclenche une action prédéterminée en cas d'écart.

15. Machine à cintrer selon l'une quelconque des revendications 12 à 14 en combinaison avec l'une quelconque des revendications 9 à 11, **caractérisée en ce que** l'image tridimensionnelle (IM) contient à la fois la pièce reproduite virtuellement (100) et l'au moins un outil de cintrage reproduit virtuellement (101, 102), dans laquelle une constellation cible est présentée, laquelle représente un agencement souhaité de la pièce réelle et de l'au moins un outil de cintrage réel au moment donné avant, pendant ou après une étape de cintrage.

16. Machine à cintrer selon l'une quelconque des revendications précédentes, **caractérisée en ce que** la machine à cintrer (1) est conçue de sorte que, au moins temporairement, un ou plusieurs paramètres de cintrage sont reproduits sur l'image tridimensionnelle (IM) sous forme textuelle et/ou graphique.

17. Machine à cintrer selon l'une quelconque des revendications précédentes, **caractérisée en ce que** le ou les imageurs 3D (9) peuvent être commandés par un opérateur au moyen de gestes.
